# FASCICULE DE BREVET EUROPEEN

(11) **EP 3 325 848 B1**
(45) Date de publication et mention de la délivrance du brevet: **10.03.2021**
(21) Numéro de dépôt: 16742333.4
(22) Date de dépôt: 21.06.2016
(51) Int. Cl.: F16H 48/40, F16H 55/17

(54) **LIAISON SOUDEE ENTRE UNE COURONNE DE DIFFERENTIEL ET SON BOITIER**
SCHWEISSVERBINDUNG ZWISCHEN EINEM DIFFERENZIALHOHLRAD UND GEHÄUSE DAVON
WELDED CONNECTION BETWEEN A DIFFERENTIAL RING GEAR AND CASING OF SAME

(30) Priorité: 20.07.2015 FR 1556824
(43) Date de publication de la demande: 30.05.2018
(73) Titulaire: Renault s.a.s., 92100 Boulogne-Billancourt (FR)
(72) Inventeur: RICHAUD, Xavier, 92800 Puteaux (FR)
(86) Numéro de dépôt international: PCT/FR2016/051518
(87) Numéro de publication internationale: WO 2017/013321

(56) Documents cités:
- EP-A1- 2 468 447
- EP-A1- 2 538 119
- EP-A1- 2 620 674
- EP-A2- 1 719 572

## Description

La présente invention se rapporte aux différentiels de transmission, notamment de véhicules automobiles.

Plus précisément, elle a pour objet une liaison soudée entre une couronne de différentiel et son boîtier, présentant une surface de liaison sensiblement cylindrique entre une face extérieure du boîtier et une face intérieure de la couronne, dans lesquelles sont ménagées une forme creuse de dégazage constituée de deux découpes en vis-à-vis dans la masse du boîtier et celle de de la couronne, de part et d'autre de leur surface de liaison.

L'invention a également pour objet un différentiel de transmission comportant un boîtier et une couronne d'entrée soudée sur celui-ci.

Dans la chaîne cinématique d'un véhicule, le couple provenant du moteur est transmis par une descente de pignons, jusqu'à la couronne de pont du différentiel. Le boîtier du différentiel est lié à la couronne de pont. Il transmet le couple au mécanisme interne du différentiel (satellites et planétaires), par l'axe de satellites.

Les couronnes de différentiel peuvent être liées au boîtier de diverses façons, notamment par frettage/sertissage, par vissage, ou par soudage. Dans une liaison par soudage, il est souvent avantageux de dégager une forme, dite forme de dégazage, entre les deux pièces soudées, pour améliorer la qualité de la soudure. Entre un boîtier de différentiel et la couronne de pont, on dégage ainsi une forme dans la masse des deux pièces, pour l'évacuation des gaz émis lors de l'opération de soudure. Sans cette forme, la soudure est irrégulière, car il se forme un bourrelet dû à une surpression faisant ressortir le métal, ce qui réduit la tenue en fatigue de la liaison.

Sur les différentiels de boîte de vitesses transversale, la denture de la couronne est généralement de type hélicoïdal à axes parallèles. L'angle d'hélice des dentures de la couronne et de son pignon d'attaque, génère des efforts axiaux dirigés à droite ou à gauche sur les dentures, selon que le moteur entraine le véhicule (tirage) ou que le véhicule entraine le moteur (rétro). La forme de dégazage est alors soumise alternativement à des efforts de traction et de compression importants. Elle doit être dessinée de manière à éviter à la fois la rupture en fatigue du boîtier de différentiel et/ou de la couronne, et sa fissuration par effet d'entailles en bout de cordon de soudure.

La publication EP 2 538 119 décrit une liaison soudée entre une couronne et son boîtier. Cette liaison présente une surface de liaison sensiblement cylindrique entre une face extérieure du boîtier et une face intérieure de la couronne, dans lesquelles sont ménagées une forme creuse de dégazage constituées de deux découpes en vis-à-vis dans la masse du boîtier et celle de la couronne.

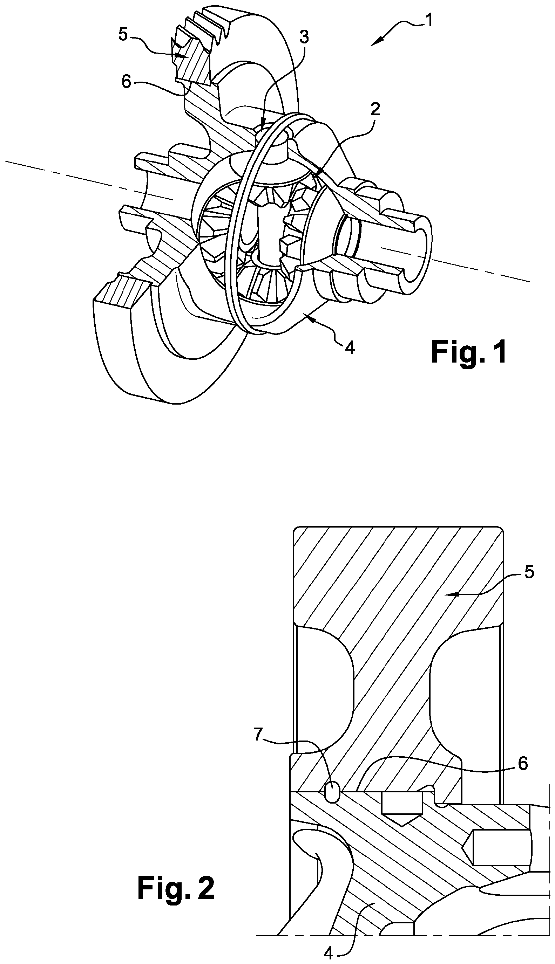

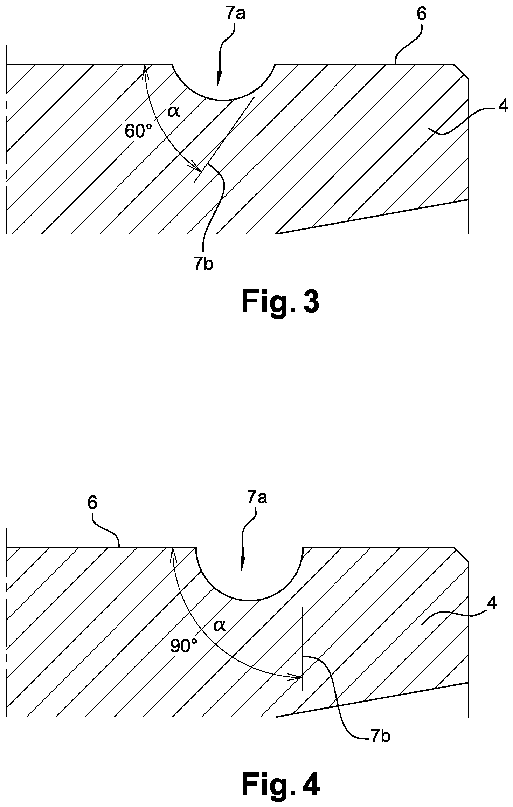

Selon cette disposition connue, les formes de dégazage sont globalement circulaires, comme sur la figure 2. En faisant évoluer l'angle entre la forme et l'axe du plan de joint de soudure, on obtient des formes de dégazage différentes, comme sur la figure 3 ou 4. Un angle fermé d'environ 60° (figure 3), présente des risques de fissures en bout de cordon, qui sont favorisés par les angles vifs en bout de soudure. Toutefois, un angle plus fermé (figure 4), génère une concentration de contraintes au niveau de la forme, qui présente plus de risques de rupture en fatigue.

La présente invention a pour but de réaliser une forme de dégazage d'un cordon de soudure de couronne de différentiel sur son boîtier, évitant à la fois la rupture en fatigue du boîtier et la fissuration par effet d'entailles en bout de cordon.

Dans ce but, elle propose que les découpes de la forme de dégazage dans la masse du boîtier et de la couronne présentent un angle supérieur à 90° entre la surface de liaison et le plan tangent à l'entrée de la découpe, et un rayon de courbure nettement plus important en fond de découpe que dans les zones de transition entre celles-ci et l'entrée de la découpe.

La présente invention sera mieux comprise à la lecture de la description suivante d'un mode de réalisation non limitatif de celle-ci, en se reportant aux dessins annexés, sur lesquels :
- la figure 1 est une vue partiellement éclatée et coupée d'un différentiel à couronne soudée,
- la figure 2 montre une forme de dégazage circulaire,
- les figures 3 et 4 illustrent des évolutions possibles de celle-ci,
- la figure 5 représente la forme de dégazage proposée sur le boîtier du différentiel, et
- la figure 6 représente la forme de dégazage complète avec la couronne soudée sur le boîtier.

Le schéma de la figure 1 fait apparaître en partie le mécanisme interne 2 d'un différentiel 1, avec l'axe de satellites 3, à l'intérieur du boîtier 4. Le boîtier 4 porte une couronne 5 à denture hélicoïdale. La partie coupée du boîtier 3 et de la couronne 4 met en évidence leur zone de liaison 6. Aucune forme de dégazage n'est représentée sur cette figure.

La figure 2 est une coupe partielle d'un autre différentiel, au niveau de la zone de liaison 6 entre le boîtier 4 et la couronne 5. Cette liaison présente une forme de dégazage circulaire 7, découpée dans la masse du boîtier 4 et celle de la couronne 5.

Sur les exemples des figures 3 et 4, on n'a représenté qu'une partie d'un boîtier de différentiel 4, avec la partie d'une forme de dégazage 7a découpée dans la masse de celui-ci. L'évolution de ces deux exemples par rapport à la figure 2, concerne l'angle α du plan de liaison 8a avec la tangente 7b à l'entrée de la découpe de forme dans la masse. Comme indiqué plus haut, un angle α fermé d'environ 60° (figure 3) présente des risques de fissures en bout de cordon, qui sont favorisés par les angles vifs en bout de soudure. Un angle α plus ouvert (figure 4), génère une concentration de contraintes au niveau de la forme, qui présente des risques élevés de rupture en fatigue.

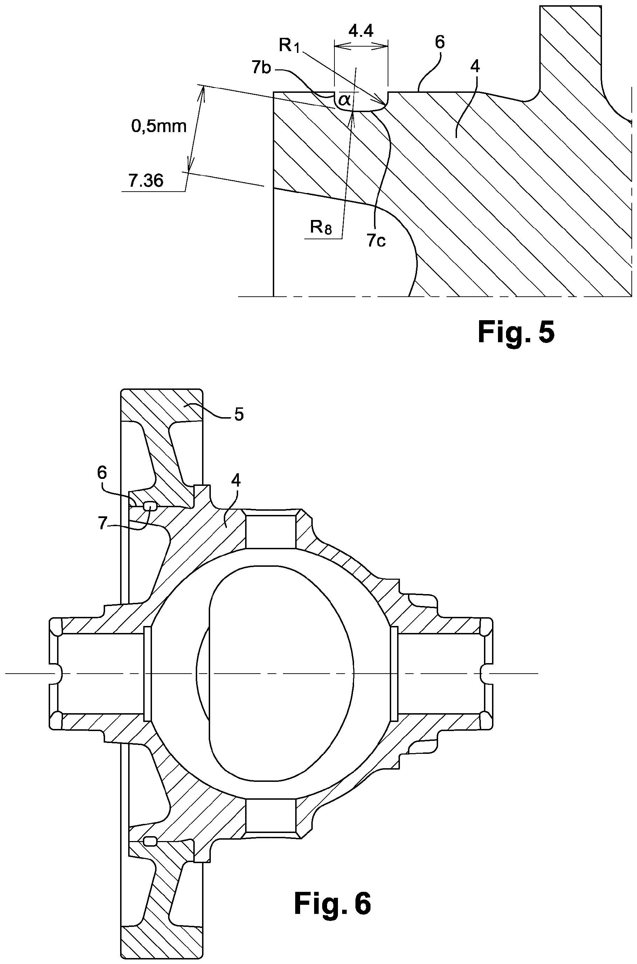

La proposition illustrée par la figure 5, est de réaliser une forme avec une face en bout de soudure ayant une angularité supérieure à 90° entre le plan de liaison et l'entrée de la découpe, et d'intégrer un rayon élevé (par exemple de 8 mm) au fond de la soudure, afin de diminuer le coefficient de concentration de contraintes et donc de diminuer les contraintes. Les découpes 7a présentent un angle α supérieur à 90° entre la surface de liaison 6 et le plan tangent à l'entrée 7b de la découpe 7c, entre celles-ci et l'entrée de la découpe. Dans cet exemple de réalisation non limitatif, le rayon de courbure au fond 7c des découpes est d'environ 8mm, et le rayon de courbure des découpes dans les zones de transition entre le fond 7c et l'entrée de la découpe, est d'environ 1mm. Sans sortir du cadre de l'invention, la largeur de la forme (4,4mm sur la figure 5) et la hauteur de la face (0,5mm sur la figure 5) peuvent varier, ainsi que la valeur des rayons (R1 et R8).

Entre l'entrée et le fond 7c des découpes 7a, le rayon de transition R1 ne remet pas en cause la tenue car la zone de forte contrainte est bien concentrée au fond de la forme. Entre ce nouveau dessin et la forme de la figure 4, le gain en contraintes est d'environ 30%. Les valeurs indiquées sur cet exemple, n'ont cependant qu'une valeur indicative, et ne limitent pas la portée de l'invention.

La figure 6, montre un différentiel complet, avec la surface de liaison 6 sensiblement cylindrique entre une face extérieure du boîtier 4 et une face intérieure de la couronne 5. Conformément à l'invention, la forme creuse de dégazage 7, est constituée de deux découpes 7a ménagées en vis-à-vis dans la masse du boîtier et celle de de la couronne de part et d'autre de leur surface de liaison. Sur cette figure, on retrouve le boîtier 4 et la couronne 5, soudées avec la forme de dégazage proposée aménagée côté boîtier et côté couronne, sur leur surface de liaison 6.

En conclusion, l'invention propose une forme de dégazage qui respecte deux points importants :
- être perpendiculaire à l'axe de la soudure afin d'éviter de générer de fissure par effet d'entailles en bout de cordon de soudure, et
- ne pas générer de concentration de contraintes afin de résister aux efforts axiaux de la denture en tirage ou en rétro, qui viennent mettre en traction la forme de dégazage.

Les avantages principaux de cette solution sont :
- la réduction du risque de fissure par effet d'entailles en bout de cordon de soudure, et
- la réduction du coefficient de concentration de contraintes au niveau de la forme de dégazage afin de résister aux efforts axiaux de la denture qui, en tirage ou en rétro, viennent mettre en traction la forme de dégazage. Le différentiel a ainsi plus de capacité en couple, pour une même définition technique de soudure.

## Revendications

1. Liaison soudée entre une couronne de différentiel (5) et son boîtier (4), présentant une surface de liaison (6) sensiblement cylindrique entre une face extérieure du boîtier (4) et une face intérieure de la couronne (5), dans lesquelles sont ménagées une forme creuse de dégazage (7) constituée de deux découpes (7a) en vis-à-vis dans la masse du boîtier (4) et celle de de la couronne (5) de part et d'autre de leur surface de liaison, **caractérisée en ce que** les découpes (7a) présentent un angle (α) supérieur à 90° entre la surface de liaison (6) et le plan tangent à l'entrée (7b) de la découpe (7a), et un rayon de courbure plus important en fond (7c) de découpe (7a), que dans les zones de transition entre celles-ci et l'entrée de la découpe (7a).

2. Liaison soudée selon la revendication 1, **caractérisée en ce que** le rayon de courbure au fond (7c) des découpes (7a) est d'environ 8mm.

3. Liaison soudée selon la revendication 1 ou 2, **caractérisée en ce que** le rayon de courbure des découpes (7a) dans les zones de transition entre le fond (7c) et l'entrée de la découpe (7a), est d'environ 1mm.

4. Différentiel de transmission (1) comportant un boîtier (4) et une couronne d'entrée (5) soudée sur celui-ci, **caractérisée en ce que** la liaison entre ces deux éléments (4, 5) est conforme à la revendication 1, 2 ou 3.

## Patentansprüche

1. Schweißverbindung zwischen einem Tellerrad (5) eines Differentials und dessen Gehäuse (4), welche eine im Wesentlichen zylindrische Verbindungsfläche (6) zwischen einer Außenseite des Gehäuses (4) und einer Innenseite des Tellerrades (5) aufweist, in welchen ein Entgasungshohlraum (7) ausgebildet ist, der aus zwei einander gegenüberliegenden Ausschnitten (7a) in der Masse des Gehäuses (4) und derjenigen des Tellerrades (5) beiderseits ihrer Verbindungsfläche besteht, **dadurch gekennzeichnet, dass** die Ausschnitte (7a) einen Winkel (α), der größer als 90° ist, zwischen der Verbindungsfläche (6) und der zum Eingang (7b) des Ausschnitts (7a) tangential verlaufenden Ebene und einen Krümmungsradius, der am Boden (7c) des Ausschnitts (7a) größer als in den Übergangsbereichen zwischen diesem und dem Eingang des Ausschnitts (7a) ist, aufweisen.

2. Schweißverbindung nach Anspruch 1, **dadurch gekennzeichnet, dass** der Krümmungsradius am Boden (7c) der Ausschnitte (7a) ungefähr 8 mm beträgt.

3. Schweißverbindung nach Anspruch 1 oder 2, **dadurch gekennzeichnet, dass** der Krümmungsradius der Ausschnitte (7a) in den Übergangsbereichen zwischen dem Boden (7c) und dem Eingang des Ausschnitts (7a) ungefähr 1 mm beträgt.

4. Differentialgetriebe (1), welches ein Gehäuse (4) und ein an dieses angeschweißtes Eingangstellerrad (5) aufweist, **dadurch gekennzeichnet, dass** die Verbindung zwischen diesen zwei Elementen (4, 5) gemäß Anspruch 1, 2 oder 3 ausgebildet ist.

## Claims

1. Welded connection between a differential ring gear (5) and the casing (4) of same, having a substantially cylindrical connecting surface (6) between an outer face of the casing (4) and an inner face of the ring gear (5), in which there is provided a hollow degassing form (7) consisting of two opposing cutouts (7a) in the mass of the casing (4) and that of the ring gear (5) on either side of the connecting surface of same, **characterized in that** the cutouts (7a) have an angle (α) greater than 90° between the connecting surface (6) and the plane tangent to the entrance (7b) of the cutout (7a), and a radius of curvature that is greater at the bottom (7c) of the cutout (7a) than in the areas of transition between same and the entrance of the cutout (7a).

2. Welded connection according to Claim 1, **characterized in that** the radius of curvature at the bottom (7c) of the cutouts (7a) is in the order of 8 mm.

3. Welded connection according to Claim 1 or 2, **characterized in that** the radius of curvature of the cutouts (7a) in the areas of transition between the bottom (7c) and the entrance of the cutout (7a) is in the order of 1 mm.

4. Transmission differential (1) including a casing (4) and an input ring gear (5) welded thereon, **characterized in that** the connection between these two elements (4, 5) is in accordance with Claim 1, 2 or 3.
